# EUROPEAN PATENT APPLICATION

(11) **EP 2 892 047 A2**
(43) Date of publication of application: **08.07.2015**
(21) Application number: 15150158.2
(22) Date of filing: 06.01.2015
(51) Int. Cl.: G09G 3/00, G02B 27/22, H04N 13/04

(54) **Image data output control method and electronic device supporting the same**

(30) Priority: 06.01.2014 KR 20140001560
(71) Applicant: Samsung Electronics Co., Ltd, Gyeonggi-do 443-742 (KR)
(72) Inventor: Kim, Dong Hui, 443-742 Gyeonggi-do (KR); Ha, Young Hee, 443-742 Gyeonggi-do (KR); Jang, Chang Jae, 443-742 Gyeonggi-do (KR); Jo, Kwang Rae, 443-742 Gyeonggi-do (KR); Cho, Jin Ho, 443-742 Gyeonggi-do (KR)
(74) Representative: Jenkins, Richard Gavin

(57) **Abstract**

A method for controlling output of image data and an electronic device supporting the same are provided. The method includes defining a frame memory by a partial memory area corresponding to a size of image data corresponding to one image frame to be output to a partial area of a display panel or dividing the frame memory into a plurality of memory areas, writing, in the plurality of memory areas, image data corresponding to successive image frames of image content, accessing the plurality of memory areas to read the written image data, and outputting the read image data to the display panel divided into a plurality of panel areas.

## Description

### CROSS REFERENCE TO RELATED APPLICATION(S)

This application claims the benefit of a Korean patent application filed on January 6, 2014 in the Korean Intellectual Property Office and assigned Serial number 10-2014-0001560.

### TECHNICAL FIELD

The present disclosure relates to output control of image data of an electronic device.

### BACKGROUND

With the development of digital technology, various electronic devices for supporting mobile communications and personal information processing, such as mobile communication terminals, personal digital assistants (PDAs), electronic organizers, smartphones and tablet personal computers (PCs), have recently been released on the market. Such electronic devices are more advanced to provide not only their own functions but also functions of other devices, thereby enabling mobile convergence.

An electronic device may output, to a display panel, image frames with a constant frequency. Here, a motion blur phenomenon may occur due to a viewpoint difference between a viewer and the image frames output to the display panel. In particular, in the case where successive image frames related to image content are output to a divided display panel area, a flicker phenomenon or the motion blur phenomenon may occur due to a data processing rate.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an image data output method for improving the image quality or reducing the cost by increasing a processing rate of image data output to one display panel, and a display module and an electronic device supporting the same.

In accordance with an aspect of the present disclosure, a display module is provided. The display module for a display panel having a plurality of panel areas. The display module includes a frame memory having at least one memory area in which image data corresponding to successive image frames are written, and a panel driving unit configured to collect image data corresponding to one image frame from the frame memory and to output the collected image data to at least one of the plurality of panel areas of a display panel. The at least one memory area may be a partial memory area or a plurality of memory areas. The image data corresponding to the image frames may be alternately written in respective ones of the plurality of memory areas. Alternatively the image data corresponding to the image frames may be sequentially written in the partial memory area.

In embodiments, the plurality of panel areas may comprise: a left eye panel area for outputting a specific image frame; a right eye panel area for outputting an image frame immediately followed by the specific image frame; and a partition wall disposition area having a constant thickness between the left eye panel area and the right eye panel area. Conveniently, a screensaver image signal may be output to the partition wall disposition area.

In accordance with another aspect of the present disclosure, an electronic device is provided. The electronic device includes a display module including a frame memory in which image data corresponding to a plurality of image frames provided from one piece of image content are written in a partial memory area or a plurality of memory areas, and a panel driving unit configured to collect the image data from the frame memory and output the image data to a plurality of areas of a display panel, and a control module configured to output one image frame to the display module or simultaneously output one image frame provided from the image content to the display module in relation to performance of a general function or a dual function. The control module may be configured either to alternately write successive image frames of the image content in the plurality of memory areas of the frame memory, when the dual function is set or an event related to activation of the dual function occurs, or to sequentially write successive image frames of the image content in the partial memory area defined in the frame memory so as to correspond to a size of an image frame to be output to a partial area of the display panel.

In accordance with another aspect of the present disclosure, a method for controlling output of image data is provided. The method includes dividing one display panel into a plurality of panel areas, defining at least one memory area corresponding to a size of image data to be output to one of the plurality of panel areas, writing image data corresponding to successive image frames of image content in the at least one memory area, reading the written image data from the at least one memory area, and outputting the read image data to the plurality of panel areas.

In embodiments, the outputting of the read image data may comprise substantially simultaneously outputting a specific image frame to a left eye panel area and a right eye panel area among the plurality of panel areas. In certain cases, the outputting of the read image data may include outputting a screensaver image signal to a partition wall disposition area having a constant thickness between the left eye panel area and the right eye panel area. Conveniently, the outputting of the screensaver image signal may comprise: periodically and alternately outputting a white color output signal and a black color output signal to the partition wall disposition area; outputting, to the partition wall disposition area, a signal corresponding to an image having a mosaic pattern or a predefined color and shape; and/or outputting, to the partition wall disposition area, last data of image data stored in a specific memory area.

Another aspect of the present disclosure provides a computer program comprising instructions arranged, when executed, to implement a method in accordance with any one of the above-described aspects. A further aspect provides machine-readable storage storing such a program.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an electronic device according to an embodiment of the present disclosure;
FIG. 2 illustrates the dual function according to an embodiment of the present disclosure;
FIG. 3 is a flowchart illustrating a method for controlling output of image data according to an embodiment of the present disclosure;
FIG. 4 schematically illustrates an electronic device operating system according to various embodiments of the present disclosure;
FIG. 5 illustrates a screen interface of an electronic device according to an embodiment of the present disclosure;
FIG. 6 illustrates a screen view of an electronic device operating system according to an embodiment of the present disclosure;
FIG. 7 illustrates a dual function according to an embodiment of the present disclosure; and
FIG. 8 is a flowchart illustrating a method for controlling output of image data according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

Throughout the description and claims of this specification, the singular encompasses the plural unless the context otherwise requires. In particular, where the indefinite article is used, the specification is to be understood as contemplating plurality as well as singularity, unless the context requires otherwise. It is to be understood that the singular forms "a," "an," and "the" include plural referents unless the context clearly dictates otherwise. Thus, for example, reference to "a component surface" includes reference to one or more of such surfaces.

Throughout the description and claims of this specification, the terms "include," "comprise," "including," or "comprising" indicate disclosed functions, operations, or existence of elements but do not exclude other functions, operations or elements. It will be further understood that the terms "comprise", "comprising,", "include", "including", "have" and/or "having", when used herein, specify the presence of stated features, numbers, steps, operations, elements, components or combinations thereof, but do not preclude the presence or addition of one or more other features, numbers, steps, operations, elements, components or combinations thereof.

The meaning of the term "or" used herein includes any combination of words connected by the term "or". For example, the expression "A or B" may indicate A, B, or both A and B.

The terms such as "first", "second", and the like used herein may refer to various elements, but do not limit the elements. For example, such terms do not limit the order and/or priority of the elements. Furthermore, such terms may be used to distinguish one element from another element. For example, without departing from the scope of the present disclosure, a first element may be referred to as a second element and vice versa.

It will be understood that when an element is referred to as being "linked", "connected" or "coupled" to another element, it can be directly connected or coupled to the other element or intervening elements may be present. In contrast, when an element is referred to as being "directly connected" or "directly coupled" to another element, it should be understood that there are no intervening elements.

The terms used herein, including technical or scientific terms, have the same meanings as understood by those skilled in the art. The commonly used terms such as those defined in a dictionary should be interpreted in the same context as in the related art and should not be interpreted in an idealized or overly formal sense unless otherwise defined explicitly.

An electronic device according to the present disclosure may support a display function. For example, the electronic device may include at least one of a smartphone, tablet personal computer (PC), a mobile phone, a video telephone, an electronic book reader, a desktop PC, a laptop PC, a netbook computer, a personal digital assistant (PDA), a portable multimedia player (PMP), a digital audio player, a mobile medical device, a camera, and a wearable device (e.g., a head mounted devices (HMDs) such as electronic glasses, an electronic apparel, an electronic bracelet, an electronic necklace, an electronic app(lication) accessory, an electronic tattoo, and a smartwatch).

According to various embodiments of the present disclosure, the electronic device may be a smart home appliance having a display function. The smart home appliance may include at least one of, for example, a television (TV), a digital versatile disc (DVD) player, an audio playback system, a refrigerator, an air conditioner, a cleaner, an oven, a microwave oven, a washing machine, an air cleaner, a set top box, a TV box (e.g., Samsung HomeSync™, Apple TV™, or Google TV™), a game console, an electronic dictionary, an electronic key, a camcorder, and an electronic picture frame.

According to various embodiments of the present disclosure, the electronic device may include at least one of a medical device (e.g., magnetic resonance angiography (MRA), magnetic resonance imaging (MRI), computed tomography (CT), a scanner, and an ultrasonic device), a navigation device, a global positioning system (GPS) receiver, an event data recorder (EDR), a flight data recorder (FDR), a vehicle infotainment device, electronic equipment for ships (e.g., a navigation system and a gyrocompass), avionics, a security device, a head module for a vehicle, an industrial or home robot, an automatic teller's machine (ATM), and a point of sales (POS) device.

According to various embodiments of the present disclosure, the electronic device may include at least one of a part of furniture or building/structure having a display function, an electronic board, an electronic signature receiving device, a projector, and a measuring instrument (e.g., a water meter, an electricity meter, a gas meter, and a wave meter). The electronic device according to the present disclosure may be one or a combination of the above mentioned devices. Furthermore, the electronic device according to the present disclosure may be a flexible device. It would be obvious to those skilled in the art that the electronic device according to the present disclosure is not limited to the above mentioned devices.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses the electronic device.

Herein, a general mode or a general function may represent a mode or a function for outputting one image frame to one display panel. When the general mode is supported, one screen may be provided while sequentially displaying successive image frames on a display panel. A dual mode or a dual function may represent a mode or a function in which one display panel is virtually (i.e. logically) divided into two or more areas and image frames are output to the areas to output a plurality of screen areas. The same image frames may be output through the plurality of screen areas. Alternatively, different image frames may be output through the plurality of screen areas, facilitating a binocular or three dimensional (3D) effect.

Such a dual mode or a dual function may be provided according to a setting, or may be provided in response to a user selection event.

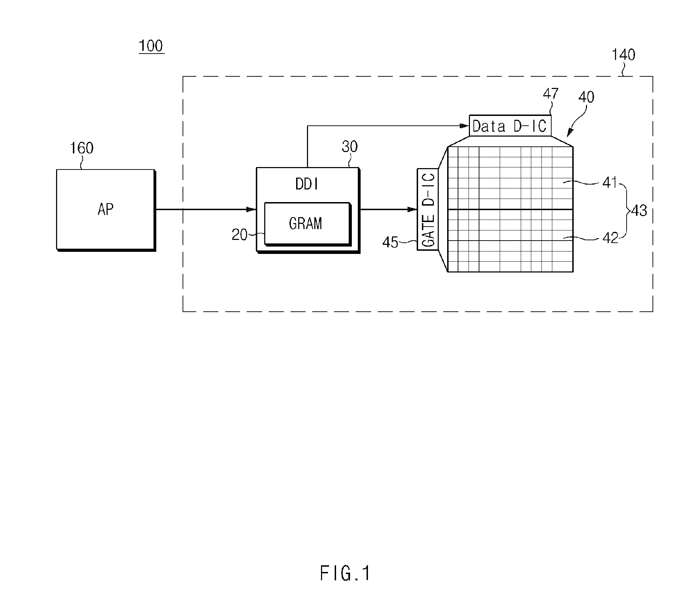

FIG. 1 is a block diagram illustrating an electronic device according to an embodiment of the present disclosure.

Referring to FIG. 1, an electronic device 100 according to an embodiment of the present disclosure may include a control module 160 and a display module 140.

In the case of performing the dual mode or dual function (for example a stereoscopic function, a binocular function, an augmented reality function based on a binocularity, a theater function or a telescope function), the electronic device 100 may respectively output, to separate areas of the display module 140, successive image frames provided from image content according to control by the control module 160. During this process, the display module 140 may read image data corresponding to one or more image frames stored in a frame memory 20 on the basis of an address value, and may respectively output the image data to separate panel areas of a display panel 40. Accordingly, the display module 140 according to various embodiments of the present disclosure may read image data corresponding to one image frame from the frame memory 20 in which image data are stored so as to correspond to a partial area of the display panel 40 (i.e. a portion of the area of the entire display panel), thereby improving an image data reading rate. Furthermore, since the display module 140 outputs each read image data corresponding to image frames to the divided display panel 40, the display module 140 may support image output suitable for the dual function.

The display module 140 may include the frame memory 20, a panel driving unit 30 and the display panel 40. The frame memory 20 may include an image frame to be output to the display panel 40.

The frame memory 20 may have a constant size corresponding to each pixel of the display panel 40. The frame memory 20 may store image data corresponding to one image frame when the general mode of the electronic device 100 is supported. The frame memory 20 may store image data corresponding to one image frame to be simultaneously (or almost simultaneously) output to a plurality of areas of the display panel 40 when the dual function of the electronic device 100 is supported. Alternatively, the frame memory 20 may store image data corresponding to one or more image frames. The image data stored in the frame memory 20 may be various image data such as image data stored in a storage module of the electronic device 100 and image data received by a communication module. Furthermore, the image data stored in the frame memory 20 may be preview data or video data collected by a camera included in the electronic device 100. Each area of the frame memory 20 may be defined by an address value (or information).

The panel driving unit 30 may read the image data stored in the frame memory 20 to provide the image data to the display panel 40 according to control by the control module 160. The panel driving unit 30 may be operated in the general mode or the dual function according to control by the control module 160. When the general mode is supported, the panel driving unit 30 may read image data stored in a certain area of the frame memory 20 so that one image frame is output to a part or the entirety of the display panel 40. When the dual function is supported, the panel driving unit 30 may read, from the frame memory 20, image data corresponding to a portion of a plurality of separate areas of the display panel 40 so that the image data are output to each area of the display panel 40. For example, the panel driving unit 30 may read, from a partial area of the frame memory 20 (i.e. a certain portion of the frame memory), image data configured to correspond to one panel area size of the display panel 40 divided into two panel areas. According to an embodiment of the present disclosure, the panel driving unit 30 may read, from a partial area of the frame memory 20, first image data configured to output to a first panel area 41 or a second panel area 42, and may output the first image data to the display panel 40. After outputting the first image data, the panel driving unit 30 may read second image data newly written in the frame memory 20 and may output the second image data to the display panel 40. When supporting the dual function, the control module 160 of the electronic device 100 may write image data corresponding to an image frame in a partial area of the frame memory 20. The panel driving unit 30 may read image data sequentially updated from a partial area of the frame memory 20 and may output the image data to the display panel 40.

According to various embodiments of the present disclosure, the panel driving unit 30 may read the first image data from a first memory area that corresponds to a partial area of the frame memory 20 divided into a plurality of areas, so that the first image data is output to the display panel 40. Furthermore, the panel driving unit 30 may sequentially read, after reading the first image data, the second image data stored in the remaining area of the frame memory 20, for example, a second memory area corresponding to the other half of the frame memory 20, so that the second image data is output to the display panel 40. According to an embodiment of the present disclosure, the panel driving unit 30 may allow the first image data and the second image data to be simultaneously output to the first panel area 41 and the second panel area 42 respectively.

According to various embodiments of the present disclosure, the panel driving unit 30 may alternately read image data stored in the frame memory 20 divided into two memory areas, and may allow the read image data to be simultaneously output to the first panel area 41 and the second panel area 42 respectively. For example, the panel driving unit 30 may allow the first image data stored in the first memory area to be output to the first panel area 41 and the second panel area 42, and then may allow the second image data read from the second memory area to be output to the first panel area 41 and the second panel area 42.

The display panel 40 may include a gate driver integrated circuit (IC) 45, a data driver IC 47 and a panel area 43 to output image data. According to an embodiment of the present disclosure, the gate driver IC 45 may sequentially transmit gate signals (e.g., gate start pulses) to gate lines among signal lines arranged in the form of a matrix on the panel area 43. According to an embodiment of the present disclosure, the gate driver IC 45 may provide identical gate signals to the first and second panel areas 41 and 42.

The data driver IC 47 may transmit data signals to data lines among the signal lines arranged on the panel area 40. Image data provided to the data driver IC 47 may have been read from the frame memory 20 by the panel driving unit 30. The data signals provided from the data driver IC 47 may be simultaneously provided to the first and second panel areas 41 and 42 when the dual function is supported. Accordingly, by virtue of the data signals and the gate signals equally provided to respective panel areas from the gate driver IC 45, identical image data may be simultaneously (or almost simultaneously, or substantially simultaneously) implemented on the two panel areas.

In relation to control of the electronic device 100 according to an embodiment of the present disclosure, the control module 160 may process and deliver data and control signals. According to an embodiment of the present disclosure, the control module 160 may write, in the frame memory 20, image data received by an element of the electronic device 100, for example, a storage module or a communication module. During this process, the control module 160 may write the image data in the frame memory 20 in a different manner according to a set mode or an activation requested function.

According to an embodiment of the present disclosure, when supporting the general mode, the control module 160 may write, in the entirety of the frame memory 20, image data corresponding to one image frame. According to an embodiment of the present disclosure, when supporting the dual function, the control module 160 may newly define an area in the frame memory 20 in which image data corresponding to an image frame are to be written. For example, the control module 160 may define, in the frame memory 20, a memory area having a constant size in which image data corresponding to an image frame to be output to one of a plurality of panel areas is to be stored.

According to various embodiments of the present disclosure, the control module 160 may divide the frame memory 20 into a plurality of memory areas. The control module 160 may write image data corresponding to one image frame in a partial area of the frame memory 20, for example, the first memory area or the second memory area. During this process, the control module 160 may adjust an image frame according to a situation, and may process image data corresponding to the adjusted image frame so that the image data is written in a partial area of the frame memory 20. For example, the control module 160 may compress or remove some data of the image frame so that the image frame is adjusted in size to be output to the first panel area 41 or the second panel area 42 of the display panel 40.

When supporting the dual function, the control module 160 may sequentially write, in a memory area having a specific size, image data to be output to one panel area. Alternatively, when supporting the dual function, the control module 160 may alternately write, in partial areas of the frame memory 20, image data corresponding to successive image frames. For example, the control module 160 may divide the frame memory 20 into two or more memory areas. The control module 160 may write, in the first memory area, the first image data corresponding to a first image frame, and may write, in the second memory area, the second image data corresponding to a second image frame. When reading of the first image data is completed, the control module 160 may write, in the first memory area, third image data corresponding to a third image frame. When reading of the second image data is completed, the control module 160 may write, in the second memory area, image data corresponding to a fourth image frame. As described above, the control module 160 may alternately write image data corresponding to image frames in the first and second memory areas.

The control module 160 may control output of an icon or a menu item related to the dual function. The control module 160 may perform key button assignment related to entry to the dual function. When an event related to performance of the dual mode or the dual function occurs, the control module 160 may transfer, to the panel driving unit 30, a control signal for a dual function (or dual mode) switch. When an event related to a request for releasing the dual function occurs, the control module 160 may transfer, to the panel driving unit 30, a control signal for dual function (or dual mode) release.

It is illustrated that the frame memory 20 is included in the panel driving unit 30, but the present disclosure is not limited thereto. For example, the frame memory 20 may be separate from the panel driving unit 30. Furthermore, it is illustrated that the frame memory 20 and the panel driving unit 30 are included in the display module 140, but the present disclosure is not limited thereto. For example, at least one of the frame memory 20 and the panel driving unit 30 may be included in the control module 160. Alternatively, at least one of the frame memory 20 and the panel driving unit 30 may be included in the display module 140.

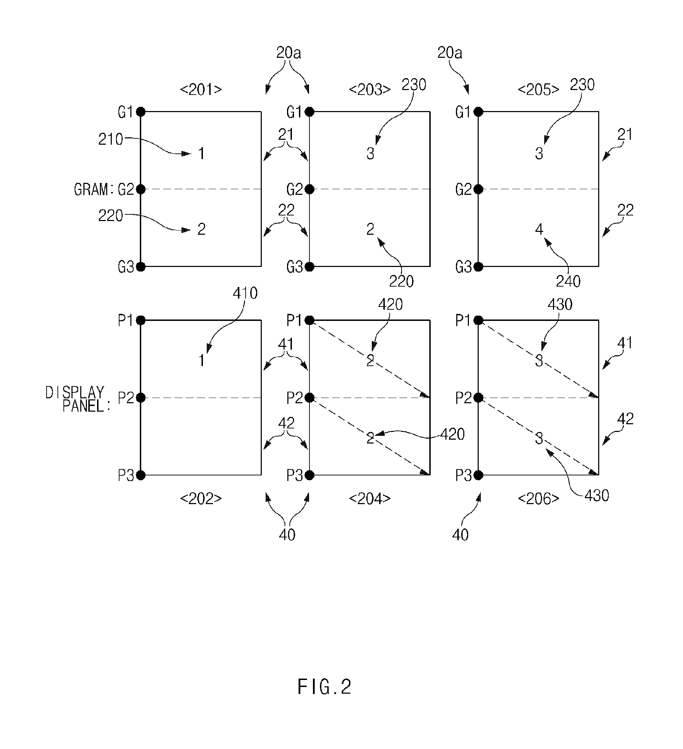

FIG. 2 illustrates the dual function according to an embodiment of the present disclosure.

Referring to FIG. 2, in relation to performance of the dual function, the control module 160 may divide a frame memory (GRAM) 20a into two memory areas. For example, as illustrated in FIG. 2, the control module 160 may assign, to a first memory area 21, memory lines having address values ranging from a start address value G1 to an address value immediately before an intermediate address value G2. Furthermore, the control module 160 may assign, to a second memory area 22, memory lines having address values ranging from the intermediate address value G2 to a last address value G3. According to various embodiments of the present disclosure, area division of the frame memory 20a is not limited to the above mentioned division. For example, the control module 160 may divide the frame memory 20a into two or more memory areas. Image data respectively corresponding to image frames may be written in the two or more memory areas. Furthermore, the respective memory areas may be defined to be of identical size or of different size. Respective memory areas may be dynamically assigned or may be statically assigned to memory lines having predetermined address values.

As illustrated in state 201, the control module 160 may write, in the first memory area 21 of the frame memory 20a, first image data 210 corresponding to a first image frame 410. The control module 160 may write, in the second memory area 22 of the frame memory 20a, second image data 220 corresponding to a second image frame 420. Here, the first image frame 410 may be a first image frame of specific image content. The second image frame 420 may be a second image frame of the specific image content. The electronic device 100 may output the first image frame 410 and the second image frame 420 to the display panel 40 at a predetermined frame rate so as to perform output of a video. Accordingly, the control module 160 may firstly write the first image data 210 in the first memory area 21, and may write the second image data 220 in the second memory area 22. An image writing order of the control module 160 is not limited to the above mentioned order. For example, the control module 160 may write, in the second memory area 22, the first image data 210 corresponding to the first image frame 410, and may write the second image data 220 in the first memory area 21.

When the first image data 210 are written in the frame memory 20a, the panel driving unit 30 may read the first image data 210 written in the first memory area 21 of the frame memory 20a. The panel driving unit 30 may transfer the read first image data 210 to the display panel 40. As illustrated in state 202, the display panel 40 may output, to the first panel area 41, the first image frame 410 corresponding to the first image data 210 according to control by the panel driving unit 30. The panel driving unit 30 may control the gate driver IC 45 so that the first image frame 410 is output to the first panel area 41. For example, the panel driving unit 30 may control the gate driver IC 45 so that the gate driver IC 45 transmits a gate signal to the first panel area 41 starting at a first start point P1 of the first panel area 41.

According to an embodiment of the present disclosure, in the state 202 in which the gate driver IC 45 is initially driven by the panel driving unit 30, the gate signal may be sequentially provided at the first start point P1. Furthermore, the panel driving unit 30 may read the second image data 220 from the frame memory 20a immediately before the gate signal is output at a second start point P2. Accordingly, in the state 202, the first image frame 410 may be output to the first panel area 41, but the first image data may not be output to the second panel area 42 since the gate signal is not yet provided thereto normally.

According various embodiments of the present disclosure, after the state 202, the second start point P2 may become operable. Accordingly, the panel driving unit 30 may allow the gate signal to be transmitted to gate lines between the second start point P2 and a last point P3 of the second panel area 42 while the gate signal is output to gate lines between the first start point P1 and the second start point P2 of the first panel area 41. When reading of the first image data 210 is completed, the control module 160 may write, in the first memory area 21 of the frame memory 20a, third image data 230 corresponding to third image frame 430. Here, the control module 160 may delete the first image data 210 previously written in the first memory area 21 or may reset the first memory area 21. While the control module 160 writes the third image data 230 in the first memory area 21, the panel driving unit 30 may read the second image data 220 stored in the second memory area 22. Furthermore, the panel driving unit 30 may provide the read second image data 220 to the display panel 40. While providing the second image data 220, the panel driving unit 30 may simultaneously provide the gate signal at the first start point P1 and the second start point P2, while providing the second image data 220. Accordingly, the panel driving unit 30 may simultaneously (or substantially simultaneously) provide the second image data 220 to the first and second panel areas 41 and 42. Therefore, as illustrated in state 204, the display panel 40 may output the second image frame 420 to the first panel area 41, and may also output the second image frame 420 to the second panel area 42. When reading of the second image data 220 from the second memory area 22 is completed, the control module 160 may write, in the second memory area 22, fourth image data 240 corresponding to the fourth image frame, as illustrated in state 205. According to an embodiment of the present disclosure, the control module 160 may delete the second image data 220 written in the first memory area 22 or may reset the second memory area 22. Alternatively, the control module 160 may overwrite the data of the second memory area 22 with the fourth image data 240.

While the control module 160 writes the fourth image data 240 in the second memory area 22, the panel driving unit 30 may read the third image data 230 written in the first memory area 21. Furthermore, the panel driving unit 30 may output the third image data 230 to the first and second panel areas 41 and 42 of the display panel 40. Here, the panel driving unit 30 may allow the gate signal of the gate driver IC 45 to be simultaneously provided to the first and second panel areas 41 and 42 so that the third image data 230 are simultaneously (or substantially simultaneously) implemented on the first and second panel areas 41 and 42.

Regarding the delivery of the data and gate signals, the gate driver IC 45 may sequentially output the gate signal to the signal lines between the first start point P1 and the second start point P2 of the first panel area 41, while the first image data 210 are provided through the data driver IC 47. Concurrently with this operation, the gate driver IC 45 may sequentially output the gate signal to the signal lines between the second start point P2 and the last point P3 of the second panel area 42. When the second image data 220 and the gate signal are sequentially provided to the first and second panel areas 41 and 42, the first and second panel areas 41 and 42 may output the second image frame 420 as illustrated in the state 204. Likewise, when the third image data 230 and the gate signal are simultaneously provided to the first and second panel areas 41 and 42, the first and second panel areas 41 and 42 may output the third image frame 430 as illustrated in state 206.

Regarding the data writing and reading of the frame memory 20a, the control module 160 may write the first image data 210 in the memory lines having address values ranging from the start address value G1 to the address value immediately before the intermediate address value G2 of the first memory area 21. Concurrently, the control module 160 may write the second image data 220 in the memory lines having address values ranging from the intermediate address value G2 to the last address value G3. Alternatively, the control module 160 may write the second image data 220 after writing the first image data 210. When reading of the first image data 210 from the first memory area 21 is completed, the control module 160 may write the third image data 230 in the memory lines having address values ranging from the start address value G1 to the intermediate address value G2 of the first memory area 21. While the control module 160 writes the third image data 230, the panel driving unit 30 may read the second image data 220 from the second memory area 22. When reading of the second image data 220 is completed, the control module 160 may write, in the second memory area 22, the fourth image data 240 corresponding to the fourth image frame. While the control module 160 writes the fourth image data 240, the panel driving unit 30 may read the third image data 230 written in the first memory area 21.

As described above, during a process of writing image data in the frame memory 20a, the control module 160 may write image data corresponding to one image frame in a partial area of the frame memory 20a. Therefore, an image writing rate of the electronic device 100 of the present disclosure may be about two times faster than that of the case of writing image data corresponding to one image frame in the entirety of the frame memory 20a. Furthermore, the panel driving unit 30 may read, from a certain partial area of the frame memory 20a, image data for one image frame. Accordingly, a data reading rate of the panel driving unit 30 for one image frame may be about two times faster than that of the case of reading data from the entirety of the frame memory 20a. Furthermore, since one image frame is simultaneously (or substantially simultaneously) output to the first and second panel areas 41 and 42 of the display panel 40, an undesirable phenomenon such as motion blur may be prevented. As described above, the electronic device 100 according to an embodiment of the present disclosure uses fewer resources to write or read data in the dual function than in the general mode, so that image frames may be output at a higher rate. Furthermore, according to the electronic device 100 of the present disclosure, since identical image frames are simultaneously (or substantially simultaneously) implemented on two panel areas, the motion blur phenomenon may be avoided. Moreover, due to the improvement in image data reading and writing rates, a flicker phenomenon may be fundamentally avoided.

Wide quad high definition (WQHD) resolution (1440×RGB×2560) is used to describe the image data output control of the electronic device 100 according to an embodiment of the present disclosure. In this case, the control module 160 may generate two image frames having a size of 1440×RGB×1280 fit to the first and second panel areas 41 and 42 based on the WQHD resolution. Furthermore, the control module 160 may divide the frame memory 20a into two memory areas for 1440×RGB×1280 resolution. The control module 160 may alternately update image data corresponding to an image frame in the first and second memory areas 21 and 22 as described above.

The panel driving unit 30 may provide, to the data driver IC 47, the first image data stored in the first memory area 21 of the frame memory 20a. Here, the panel driving unit 30 may control the gate driver IC 45 so that a second gate signal is sequentially provided to gate lines #1281 to #2560, while a first gate signal is sequentially provided to gate lines #1 to #1280. For example, the gate signal may be sequentially provided to the gate line #1 to the gate line #1280, and may be sequentially provided to the gate line #1281 to the gate line #2560. Accordingly, when an image data signal corresponding to one image frame is provided to the first and second panel areas 41 and 42, identical image frames may be implemented on the first and second panel areas 41 and 42. For example, a first signal of image data may be simultaneously provided to the gate line #1 and gate line #1281, and a second signal of the image data may be simultaneously provided to the gate line #2 and the gate line #1282, so that identical image frames may be implemented on two panel areas.

The panel driving unit 30 may sequentially provide a first gate signal to the gate lines #1 to #1280, while providing, to the data driver IC 47, the second image data stored in the second memory area 22 of the frame memory 20a. Concurrently, the panel driving unit 30 may sequentially provide, to the gate lines #1281 to #2560, a second gate signal exactly or approximately synchronous with the first gate signal. When the first gate signal is provided to the gate lines starting at the gate line #1, the first panel area 41 may output the second image frame corresponding to the second image data. While the second gate signal is provided to the gate lines #1281 to #2560, the second panel area 42 may output the second image frame corresponding to the second image data.

According to an embodiment of the present disclosure, the control module 160 may output a 60Hz image. In this case, since the display panel 40 simultaneously (or substantially simultaneously) outputs respective image frames, the electronic device 100 of the present disclosure may bring about the effect of outputting a 120Hz image.

According to various embodiments of the present disclosure, the electronic device 100 including the display module 140 may be installed in a dual function supporting device to support the dual function. In this case, the display module 140 may respectively output image frames obtained from one piece of image content to a left eye panel area and a right eye panel area. A partition wall disposition area that is aligned with a partition wall disposed on a device mounting part of the dual function supporting device may be disposed between the left eye panel area and the right eye panel area. Here, the partition wall may be disposed between a left eye area and a right eye area of the dual function supporting device and may have a constant thickness. In this case, the display module 140 may output the partition wall disposition area having a constant thickness to a boundary area between the left eye panel area and the right eye panel area.

Considering the above mentioned resolution, the resolution of the left eye panel area may be achieved by the gate lines #1 to #1275, and the resolution of the right eye panel area may be achieved by the gate lines #1285 to #2560. The partition wall disposition area may be defined by the gate lines #1276 to #1284. The control module 160 may adjust successive image frames obtained from one piece of image content so that the image frames have a size of the gate lines #1 to #1275. The control module 160 may output a predefined image signal to the partition wall disposition area. Here, the predefined image signal may have a predefined constant pattern. Furthermore, the predefined image signal may correspond to an image having a constant color and a gray level that is gradationally changed. For example, the gray level of a partition wall image of the predefined image signal may be gradationally changed in a direction from an adjacent position to the left eye panel area to a center portion of the partition wall disposition area. Furthermore, the gray level of the partition wall image may be changed in a direction from the center portion of the partition wall disposition area to an adjacent area to the right eye panel area. The gray level may have multiple steps.

According to various embodiments of the present disclosure, as described above, the electronic device 100 may include the display module 140 and the control module 160, and may further include a communication module, an input module, a multimedia module and a storage module.

The display module 140 applicable to the electronic device 100 displays a shot image and/or a received image, a user interface (UI) or a graphical UI (GUI) in the form of a window when the electronic device 100 is in a video call mode or a shooting mode. According to an embodiment of the present disclosure, the display module 140 displays application windows for various functions (or applications) executed in the electronic device 100. Furthermore, the display module 140 activates a virtual input device (e.g., a virtual touchpad) on the application window according to control by the control module 160, and transfers a signal input through the virtual input device to the control module 160.

The display module 140 may support, according to a rotation direction (or orientation) of the electronic device 100, screen display in a landscape mode, screen display in a portrait mode, and screen switching display depending on switching between the landscape mode and the portrait mode. The display module 140 may be placed in the landscape mode in relation to support of the dual mode or the dual function. In the case where the display module 140 is placed in the landscape mode, the display module 140 may automatically have a screen split state according to a dual function switch. The display module 140 may output at least one of an icon or a menu item related to the dual function to at least one of split screens.

According to an embodiment of the present disclosure, the display module 140 may include at least one of a liquid crystal display (LCD), a thin film transistor LCD (TFT LCD), a light emitting diode (LED), an organic LED (OLED), an active matrix OLED (AMOLED), a flexible display, a bended display, and a three-dimensional (3D) display. Some of the displays may be transparent or light transmissive displays.

Furthermore, the display module 140 may be provided as a touchscreen including a touch panel so that the display module 140 may be used as not only an output device but also an input device. The display module 140 may convert a change in a pressure on a specific site of the display module 140 or a change in a capacitance of a specific site of the display module 140 into an electric input signal. The touch panel may detect not only a location and an area of a touch but also a pressure of the touch. As described above, the display module 140 may include the touch panel and the display panel. The touch panel may be placed on the display panel. The touch panel may be an add-on type touch panel positioned on the display panel or an on cell type or in cell type touch panel inserted into the display panel. The touch panel transfers, to the control module 160, a user input responding to a gesture of a user on the display module 140. Here, the user input generated by a touching means such as a finger or a touch pen may include a touch, a multi touch, a tap, a double tap, a long tap, tap & touch, drag, flick, press, pinch in and pinch out. The user input may be defined as an event related to selection of the dual function or the dual mode.

The storage module may store at least one piece of image content to be output to the display module 140. The image content may include a plurality of image frames. For example, the image content may be video content configured to output a constant number of image frames within a constant time. The storage module may include at least one of storage media such as a flash memory, a hard disk, a micro type memory, a card type memory (e.g. a secure digital (SD) card or an extreme digital (XD) card), a random access memory (RAM), a static RAM (SRAM), a read only memory (ROM), a programmable ROM (PROM), an electrically erasable PROM (EEPROM), a magnetic RAM (MRAM), a magnetic disk, and an optical disk. The electronic device 100 may be operated in association with a web storage for performing a storage function of the storage module on the Internet.

The communication module may support a communication function of the electronic device 100. The communication module may receive image content from another electronic device or a server device according to preset schedule information or an input event. The image content received by the communication module may be output to the display module 140 or may be stored in the storage module. The communication module for receiving image content may include various communication units such as a broadcast receiving unit, a mobile communication unit and a short range communication unit.

The input module may generate an input signal related to control of the electronic device 100. For example, the input module may generate an input signal related to a dual mode or dual function switch. In the case where a touchscreen is provided as the display module 140, the display module 140 may perform a function of the input module.

The multimedia module may perform a process related to an audio signal of the electronic device 100. For example, the multimedia module may perform a process for outputting an audio signal contained in image content that is currently being output to the display panel 40. In the case where the electronic device 100 supports a call function or a recording function, the multimedia module may include a microphone.

The various embodiments of the present disclosure described herein may be implemented, for example, in a recording medium readable by a computer or the like using software, hardware or a combination thereof. For implementation with hardware, the various embodiments of the present disclosure described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and other electric units. In some cases, the various embodiments of the present disclosure described herein may be implemented with the control unit 160. For implementation with software, the procedures or functions described herein may be implemented with additional software modules. Each software module may perform at least one function or operation described herein.

According to various embodiments of the present disclosure, the control module 160 of the electronic device 100 may include a bus and at least one processor. Here, the process may include, for example, a processor related to control of the panel driving unit and a process related to control of the frame memory.

The bus may be a circuit for connecting elements of an electronic device (e.g., a process, a storage module, an input module, a display module and a communication module) to each other and for enabling communication (e.g., control message transfer) between the elements.

The processor may receive instructions from the elements included in the electronic device through the bus, may interpret the received instructions, and may perform operations or data processing according to the interpreted instructions. Here, the processor may execute at least one application stored in the storage module so that a service is provided on the basis of the application.

The processor may include at least one application processor (AP) or at least one communication processor (CP). Here, the AP or the CP may be included in the processor or may be included in different IC packages respectively. Alternatively, the AP or the CP may be included in a single IC package. Furthermore, the processor may include at least one of the control module 160 and the panel driving unit 30. Alternatively, at least one of the control module 160 and the panel driving unit 30 may include at least one of the processor.

The AP may run an operating system or an application program so as to control a plurality of hardware or software components connected to the AP, and may perform operations and may process various types of data including multimedia data. The AP may be implemented with a system on chip (SoC). The CP may perform at least a part of a multimedia control function. The CP may identify and authenticate terminals in a communication network using a subscriber identification module (SIM) (e.g., a SIM card). Here, the CP may provide services such as a voice call service, a video call service, a text message service and a packet data transmission service to a user. Furthermore, the CP may control data transmission/reception of the communication module. The AP or the CP may load, on a volatile memory, an instruction or data received from a nonvolatile memory connected to the AP or the CP or at least one of other elements so as to process the instruction or data. Furthermore, the AP or the CP may store, in the nonvolatile memory, data received from or generated by at least one of other elements. The CP may manage a data link and may convert a communication protocol for communication between the electronic device including hardware and other electronic devices connected thereto through a network. Here, the CP may be implemented with an SoC. In addition, the processor may further include a graphic processing unit (GPU).

As described above, the display module according to an embodiment of the present disclosure may include the frame memory 20, the panel driving unit 30, and the display panel 40. The frame memory 20 may have a partial memory area in which image data corresponding to one image frame to be output to a partial panel area among a plurality of panel areas obtained by dividing one display panel are written or a plurality of memory areas in which image data respectively corresponding to a plurality of image frames are written. The panel driving unit 30 accesses the partial memory area of the frame memory 20 or alternately accesses the plurality of memory areas to collect the written image data. The display panel 40 outputs the image data collected by the panel driving unit 30 to the plurality of panel areas.

According to various embodiments of the present disclosure, the image data corresponding to the image frames may be alternately written in the plurality of memory areas or the image data corresponding to the image frames may be sequentially written in the partial memory area.

According to various embodiments of the present disclosure, the display panel 40 may include the gate driver IC 45 for outputting a gate signal, a data driver IC 47 for outputting a data signal, and the panel area 43 having a plurality of areas through which image frames of the same image content are output.

According to various embodiments of the present disclosure, the panel area 43 may include the first panel area 41 corresponding to signal lines between a first start point and a second start point, and the second panel area 42 corresponding to signal lines between the second start point and a last point.

According to various embodiments of the present disclosure, the gate driver IC 45 may equally output the gate signal to the first panel area 41 and the second panel area 42.

According to various embodiments of the present disclosure, image data corresponding to the same image frame may be provided to the first panel area 41 and the second panel area 42 of the display panel 40.

According to various embodiments of the present disclosure, the display panel 40 may include a left eye panel area for outputting a specific image frame, a right eye panel area for outputting an image frame immediately followed by the specific image frame, and a partition wall disposition area having a constant thickness between the left eye panel area and the right eye panel area.

According to various embodiments of the present disclosure, a specified screensaver image signal may be output to the partition wall disposition area.

The electronic device 100 according to an embodiment of the present disclosure may include the display module 140 and the control module 160. The display module 140 includes the frame memory 20 in which image data corresponding to a plurality of image frames provided from one piece of image content are written in a partial memory area or a plurality of memory areas, the panel driving unit 30 for accessing the frame memory 20 to collect the written image data, and the display panel 40 for outputting the image data collected by the panel driving unit 30 to a plurality of areas. The control module 160 outputs one image frame to the display module 140 or simultaneously (or substantially simultaneously) outputs an image frame of the same image content to the plurality of areas in relation to performance of a dual function or a general function.

According to various embodiments of the present disclosure, when the dual function is set or an event related to activation of the dual function occurs, the control module 160 may alternately write successive image frames of image content in the plurality of memory areas of the frame memory 20, or may sequentially write successive image frames of one piece of image content in the partial memory area defined in the frame memory so as to correspond to a size of an image frame to be output to a partial area of the display panel.

According to various embodiments of the present disclosure, the control module 160 may sequentially write the successive image frames of the image content in the first memory area 21 among the plurality of memory areas, and may write a black frame in the second memory area 22. According to various embodiments of the present disclosure, the control module 160 may alternately write the successive image frames of the image frame and the black frame in the partial memory area defined to have a size of image data to be output to a partial panel area.

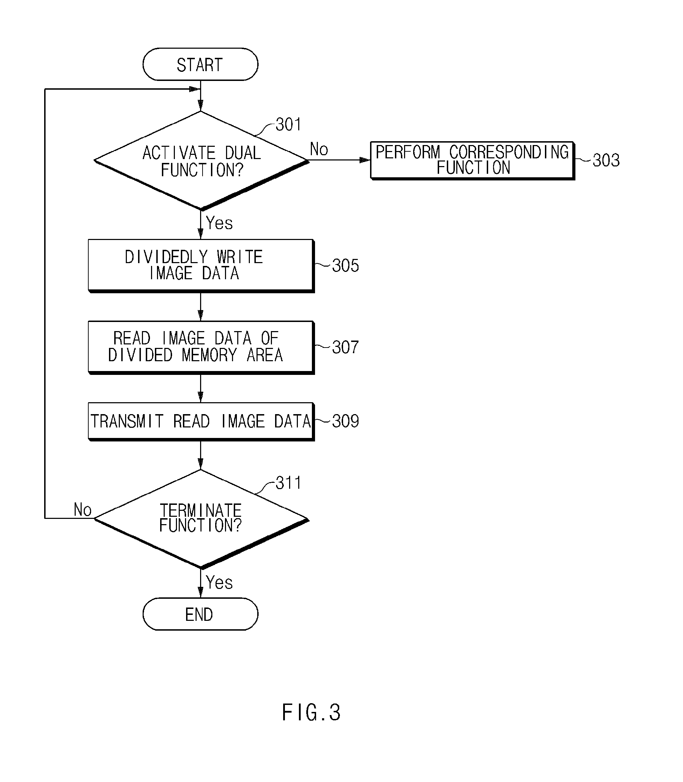

FIG. 3 is a flowchart illustrating a method for controlling output of image data according to an embodiment of the present disclosure.

Referring to FIG. 3, according to an embodiment of the present disclosure, the control module 160 may determine whether an event related to activation of the dual mode or dual function occurs in operation 301. For example, the control module 160 may determine whether an event such as requesting video content playback or selection of an icon or a menu item related to activation of the dual function occurs. If an event that occurs in operation 301 is not related to activation of the dual function, the control module 160 may proceed to operation 303 to support performance of a corresponding function. For example, the control module 160 may control performance of a specific function according to the type of an event, such as standby screen output, a sound source playback function and a scheduling function of the electronic device 100. Alternatively, the electronic device 100 may control performance of a previously performed function, for example, a file editing function or a gallery function, according to the type of an event. Alternatively, the electronic device 100 may support maintenance of a sleep mode or output of a lock screen.

If an event related to activation of the dual function occurs in operation 301, the control module 160 may write image data in a divided memory area in operation 305. In this operation, the control module 160 may divide the frame memory 20 into two or more memory areas, and may respectively write image frames in the memory areas. The control module 160 may adjust at least one of a size and resolution of an image frame so that the image frame is fit to the memory areas. In response to an operation of alternately reading the image data written in the memory areas, the control module 160 may alternately write image data corresponding to a new image frame. For example, the control module 160 may write the second image data 220 in the second memory area 22, while the first image data 210 written in the first memory area 21 is read.

In operation 307, the control module 160 may control reading of image data from the memory areas of the frame memory 20. The control module 160 may control the panel driving unit 30 so as to read image data written in a partial area of the frame memory 20, for example, the first memory area 21 or the second memory area 22.

When the reading of the image data is completed, the panel driving unit 30 may transmit the image data read from the memory areas to the display panel 40 in operation 309. The display panel 40 may output the transmitted image data. In this operation, the panel driving unit 30 may divide the display panel 40 into two panel areas on the basis of a gate line. Furthermore, the panel driving unit 30 may control the gate driver IC 45 so that a gate signal is simultaneously output to start points of the first and second panel areas 41 and 42. Here, a data signal may be provided to the first and second panel areas 41 and 42, so that identical image frames may be implemented on the two panel areas. While the panel driving unit 30 transmits the read image data to the display panel 40, the control module 160 may write image data corresponding to a new image frame in a memory area, image data reading from which has been completed.

Next, the control module 160 may determine whether an event related to function termination occurs in operation 311. If the event related to function termination occurs, the control module 160 may terminate the dual function. According to an embodiment of the present disclosure, the control module 160 may terminate the dual function and may enter the general mode. Here, in the general mode, the display panel 40 may not be divided into partial areas so that one image frame is output to the entire area of the display panel 40. Alternatively, in relation to the function termination event, the control module 160 may enter the sleep mode or may return to a function performed immediately before performing the dual function. If the function termination event does not occur, the process may return to operation 301 so that the control module 160 re-performs operation 301 and the following operations.

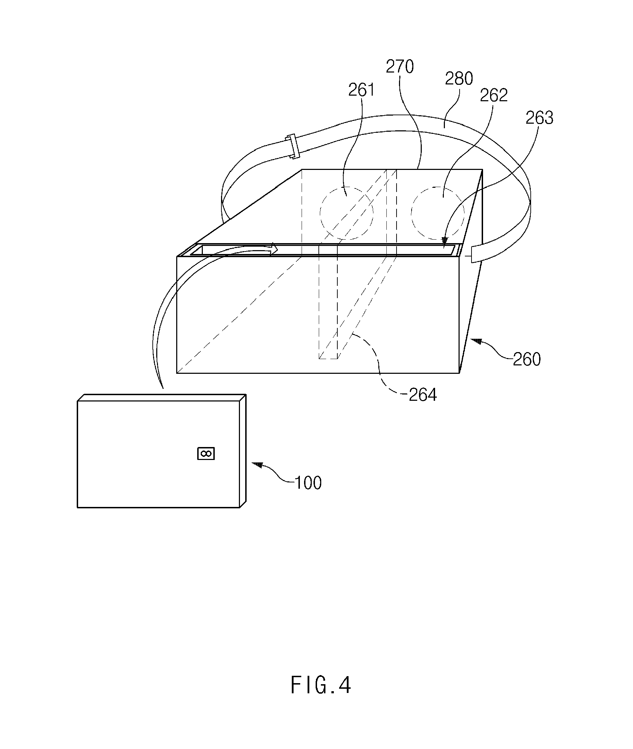

FIG. 4 schematically illustrates an electronic device operating system according various embodiments of the present disclosure.

Referring to FIG. 4, the electronic device operating system may include the electronic device 100 and a dual function supporting device 260.

According to an embodiment of the present disclosure, the dual function supporting device 260 may include a device body 270 and a support member 280. The device body 270 may include a device mounting unit 263 for mounting the electronic device 100 and first and second lens areas 261 and 262 to be aligned with both eyes. Furthermore, at least one lens for magnifying an image output to the display module 140 may be disposed inside the device body 270. A partition wall 264 may be disposed at a vertical center of the device body 270 so that respective images are obtained through the first and second lens areas 261 and 262.

When the electronic device 100 is mounted on the device mounting unit 263, an image output to the display module 140 may be observed through the first and second lens areas 261 and 262. The support member 280 may be disposed on a certain body part, e.g., the head, of a user. The support member 280 may be elastic to support the device body 270. The support member 280 may include a device for adjusting a length of the device body 270.

When the electronic device 100 is mounted on the device mounting unit 263, the electronic device 100 may automatically activate the dual function. To this end, a switch device may be disposed on at least a part of the outer side of the electronic device 100. The switch device disposed on the electronic device 100 may be operated while the electronic device 100 is inserted into the device mounting unit 263, so as to generate an input event corresponding to activation of the dual function. Alternatively, the electronic device 100 may include at least one sensor for detecting state in which the electronic device 100 is inserted into the device mounting unit 263. For example, the electronic device 100 may include an illuminance sensor and a pressure sensor. If a predetermined sensor signal is generated in the sensor, the electronic device 100 may determine that the electronic device 100 is inserted into the device mounting unit 263 and may automatically activate the dual function.

Since the first and second panel areas 41 and 42 output different image frames, the dual function supporting device 260 according to an embodiment of the present disclosure may support a 3D dual view function. In relation to this operation, the gate driver IC may provide individual gate signals to the first and second panel areas 41 and 42. While first image data is output to the second panel area 42, the panel driving unit 30 may output second image data to the first panel area 41. In this case, when a specific image frame is output to the first panel area 41, a frame that is immediately followed by (or a frame that immediately follows) the specific image frame may be output to the second panel area 42. In relation to this operation, there may be provided a plurality of gate driver ICs, and each gate driver IC may provide a respective gate signal to a corresponding panel area.

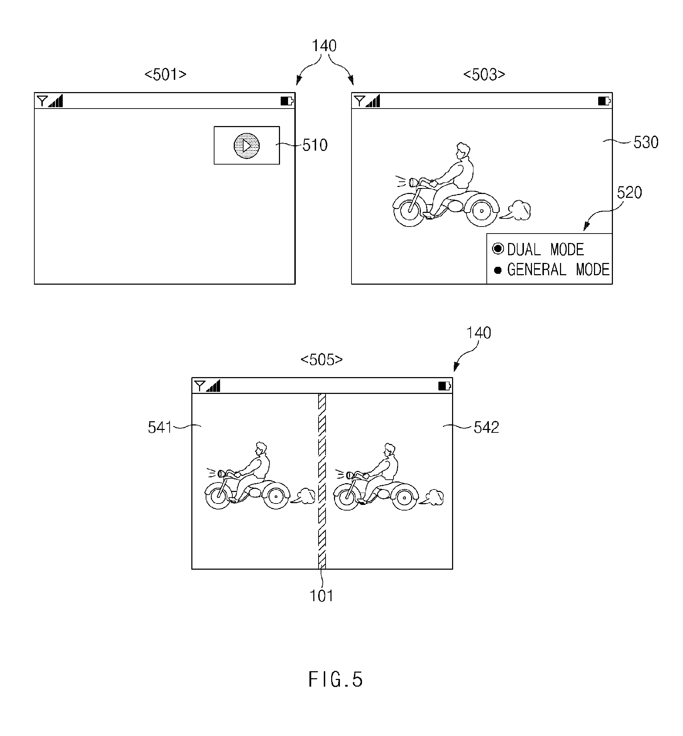

FIG. 5 illustrates a screen interface of an electronic device according to an embodiment of the present disclosure.

Referring to FIG. 5, the display module 140 according to various embodiments of the present disclosure may output a screen including at least one image content 510 as illustrated in screenshot 501. In relation to this operation, the display module 140 may output an icon or a menu item related to retrieval of the at least one image content 510. When the icon or the menu item is selected, the display module 140 may output the screen including the at least one image content 510 as illustrated in screenshot 501. Alternatively, the display module 140 may output the screen as illustrated in screenshot 501 when a specific event occurs.

When an event related to playback of the at least one image content 510 occurs, the control module 160 may play the image content 510. Accordingly, the display module 140 may output an image content playback screen 530 as illustrated in screenshot 503. The image content playback screen 530 shown in screenshot 503 may be a playback screen according to the general mode. In relation to this operation, the control module 160 may write, in the frame memory 20, image data corresponding to respective image frames periodically or in response to operation of the panel driving unit 30. The panel driving unit 30 may read image data written in the frame memory 20 and may output the image data to one screen area over the display panel 40.

According to an embodiment of the present disclosure, the control module 160 may output a menu area 520 in response to menu selection as illustrated in screenshot 503. When an event related to dual function selection occurs on the menu area 520, the control module 160 may output a dual function screen as illustrated in screenshot 505. In relation to the output of the screen in screenshot 505, the control module 160 may divide the frame memory 20 into memory areas, and may write image data corresponding to a plurality of image frames in the memory areas as described above. Here, the control module 160 may update the image data written in the memory areas with image data corresponding to a new image frame, according to an image frame output rate. When image data are dividedly written in the frame memory 20, the panel driving unit 30 may alternately access any one of the memory areas so as to read image data written in a corresponding memory area. According to various embodiments of the present disclosure, the control module 160 may define a partial memory area of the frame memory corresponding to a size of a left eye panel area 541 or a right eye panel area 542 of the display panel 40. The control module 160 may sequentially write, in the partial memory area, image data corresponding to an image frame of one piece of image content.

The panel driving unit 30 may divide the display panel 40 into partial areas, for example, the left eye panel area 541 and the right eye panel area 542, during a process of transferring image data to the display panel 40. The panel driving unit 30 may control the gate driver IC 45 so that gate signals simultaneously start at respective start points of the left eye and right eye panel areas 541 and 542. Accordingly, image data read from one of the memory areas divided by the panel driving unit 30 may be output to the right eye panel area 542 of the display panel 40, while being output to the left eye panel area 541.

A partition wall disposition area 101 may be disposed between the left eye panel area 541 and the right eye panel area 542. The partition wall disposition area 101 may be aligned with the partition wall 264, while being inserted into the dual function supporting device 260 of FIG. 4. According to various embodiments of the present disclosure, the control module 160 may control image processing for the partition wall disposition area 101. For example, the control module 160 may output a screensaver image signal to the partition wall disposition area 101. The screensaver image signal may include, for example, a white color output signal and a black color output signal transmitted periodically and alternately. Alternatively, the screensaver image signal may correspond to an image having a mosaic pattern or a specified color and shape. Alternatively, the screensaver image signal may be last data of image data stored in the memory areas of the frame memory 20. According to an embodiment of the present disclosure, the control module 160 may transfer the screensaver image signal to the panel driving unit 30 so that the screensaver image signal is output to the partition wall disposition area 101. Accordingly, the display module 140 of the electronic device 100 may avoid a stain phenomenon that may occur on the partition wall disposition area 101.

According to various embodiments of the present disclosure, the dual function may be set in advance or may be provided as a default. When an event for requesting playback of the at least one image content 510 occurs while a screen as illustrated in screenshot 501 is being output, the control module 160 may output a dual function screen as illustrated in screenshot 505 according to a presetting of the dual function. According to various embodiments of the present disclosure, when the electronic device 100 is mounted on the device mounting unit 203 of the dual function supporting device 260 of FIG. 4 in the state of the screen 503, the control module 160 may automatically switch to a screen outputting a dual function screen as illustrated in screenshot 505.

According to various embodiments of the present disclosure, the control module 160 may provide a black frame periodically for the purpose of image improvement such as reduction of motion blur. For example, the control module 160 may store first image data in the first memory area 21, and may write image data corresponding to the black frame in the second memory area 22. When reading of the first image data is completed, the control module 160 may write the second image data in the first memory area 21. The panel driving unit 30 may alternately access the first and second memory areas 21 and 22 to read data in the order of the first image data, the black frame data, the second image data and the black frame data, and may transmit the read data to the display panel 40.

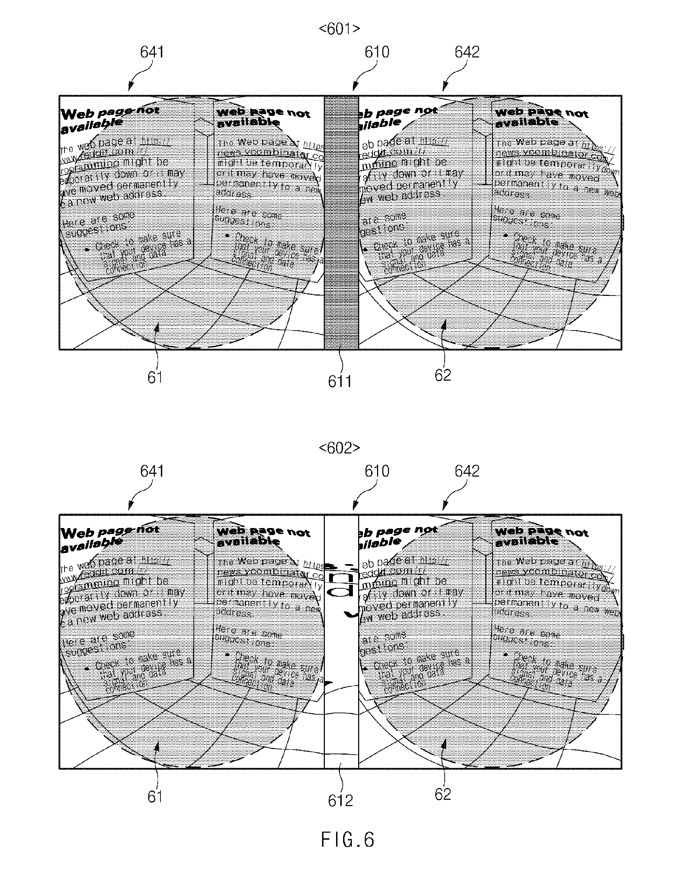

FIG. 6 illustrates a screen view of an electronic device operating system according to an embodiment of the present disclosure.

Referring to FIG. 6, when the electronic device is mounted on the dual function supporting device, the display module 140 may output, to a left eye panel area 641 and a right eye panel area 642, image frames provided from the same image content. According to an embodiment of the present disclosure, as illustrated in state 601, the display module 141 may output, to a partition wall disposition area 610, a first partition wall image 611 to which gradation of a gray level is applied. The gradation may be applied linearly. According to various embodiments of the present disclosure, as illustrated in state 602, the display module 140 may output, to the partition wall disposition area 610, a second partition wall image 612 to which last display data of the left eye panel area 641 or start display data of the right eye panel area 642 is applied or a specific pattern is variably applied. According to various embodiments of the present disclosure, the control module of the electronic device may adjust the images to be output to the left eye panel area 641 and the right eye panel area 642 so that the images have a specified size fit to lens areas 61 and 62 of a dual function supporting device, e.g. lens areas 261 and 262 of the device 260 illustrated in FIG. 4.

As described above, a method for controlling output of image data according to an embodiment of the present disclosure may include defining at least one memory area corresponding to a size of image data to be output to one of a plurality of panel areas of one display panel 40. The method may further include writing image data corresponding to successive image frames of image content in the at least one memory area. The method may further include accessing the memory area to read the written image data. The method may further include outputting the read image data to the display panel 40 divided into the plurality of panel areas.

According to various embodiments of the present disclosure, the writing may include writing image data corresponding to next (i.e. following, subsequent, ensuing, or consequent) successive image frames in the second memory area 22 among the plurality of memory areas, while reading image data written in the first memory area 21 among the plurality of memory areas.

According to various embodiments of the present disclosure, the writing may include sequentially writing image data in one memory area defined to correspond to a size of the image data to be output to the one panel area.

According to various embodiments of the present disclosure, the outputting may include providing gate signals to the first panel area 41 corresponding to signal lines between a first start point and a second start point and the second panel area 42 corresponding to signal lines between the second start point and a last point, the gate signals being exactly or approximately synchronous with each other.

According to various embodiments of the present disclosure, the outputting may include providing image data corresponding to the same image frame to the first panel area 41 and the second panel area 42.

According to various embodiments of the present disclosure, the outputting may include simultaneously (or substantially simultaneously) outputting a specific image frame to the left eye panel area 541 and the right eye panel area 542.

According to various embodiments of the present disclosure, the outputting may include outputting a specified screensaver image signal to the partition wall disposition area 101 having a constant thickness between the left eye panel area 541 and the right eye panel area 542.

According to various embodiments of the present disclosure, the outputting the screensaver image signal may include periodically and alternately outputting a white color output signal and a black color output signal to the partition wall disposition area 101. The outputting the screensaver image signal may further include outputting, to the partition wall disposition area 101, a signal corresponding to an image having a mosaic pattern or a specified color and shape. The outputting the screensaver image signal may further include outputting, to the partition wall disposition area 101, last data of image data stored in a specific memory area of the frame memory 20.

According to various embodiments of the present disclosure, the method may further include receiving an event of releasing a dual function for outputting image data to the plurality of panel areas, and writing image data corresponding to one image frame to be output to the entirety of the display panel.

According to various embodiments of the present disclosure, the method may further include sequentially writing the successive image frames of the image content in the first memory area 21 among the plurality of memory areas, and writing a black frame in the second memory area 22 among the plurality of memory areas.

According to various embodiments of the present disclosure, the method may further include sequentially writing image data in one memory area defined to correspond to a size of the image data to be output to the one panel area.

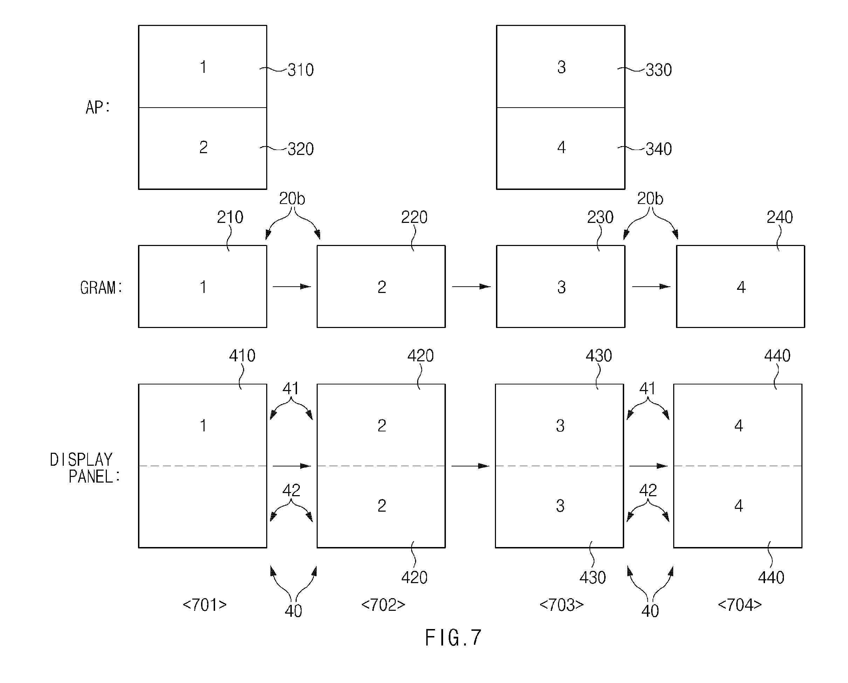

FIG. 7 illustrates a dual function according to another embodiment of the present disclosure.

Referring to FIG. 7, when supporting the dual function, the control module 160 according to an embodiment of the present disclosure may adjust successive image frames corresponding to one piece of image content into image data corresponding to an image frame able to be output to a plurality of panel areas. For example, as illustrated in state 701, the control module 160 may adjust the successive image frames into image data corresponding to an image frame having such a size as to be output to a partial panel area of the display panel 40. According to an embodiment of the present disclosure, the control module 160 may generate an adjusted first image frame 310 that has undergone the above mentioned adjustment to have such a format as to be output to the first panel area 41 or the second panel area 42. Likewise, the control module 160 may generate an adjusted second image frame 320, an adjusted third image frame 330 and an adjusted fourth image frame 340 to be output to the first panel area 41 or the second panel area 42.

The control module 160 may define memory areas of a frame memory 20b so that the memory areas correspond to the adjusted image frames. Compared to FIG. 2, the control module 160 may define a partial memory area corresponding to a size of one of the first memory area 21 and the second memory area 22 of the frame memory 20a. For example, in the frame memory 20a of FIG. 2, if the first memory area 21 is defined to store image data, the second memory area 22 may be set not to store image data. The control module 160 may sequentially write image data corresponding to the adjusted image frames 310 to 340 in the frame memory 20b in which a partial memory area is defined. In this operation, the control module 160 may delete previous image data, or write new image data after resetting, or overwrite the previous image data with the new image data.

Some memory areas may be defined in the frame memory 20b so that the adjusted image frames 310 to 340 may be written therein. For example, an area for storing image data in the frame memory 20b may be defined to have a size of the first memory area 41 or the second memory area 42 illustrated in FIG. 2. The first image data 210 corresponding to the first image frame 310 adjusted in the state 701 may be written in the frame memory 20b. The second image data 220 corresponding to the second image frame 320 adjusted in state 702 may be written in the frame memory 20b. The third image data 230 corresponding to the third image frame 330 adjusted in state 703 may be written in the frame memory 20b. The fourth image data 240 corresponding to the fourth image frame 340 adjusted in state 704 may be written in the frame memory 20b.

The panel driving unit 30 may read the image data 210 to 240 written in the frame memory 20b and may output the read image data to the display panel 40. In this operation, the panel driving unit 30 may provide gate signals to the plurality of areas of the display panel 40 in the same or similar form. For example, the panel driving unit 30 may provide identical synchronous gate signals to the first panel area 41 and the second panel area 42. The panel driving unit 30 may sequentially read image data from the frame memory 20b and may provide the read image data to the display panel 40. In this operation, since the image frame adjusted to correspond to some panel areas are read from some areas of the frame memory 20b, the panel driving unit 30 may more rapidly read image data for one image frame compared to the case of reading data from the entirety of the frame memory.

The display panel 40 may output the first image data 210 to the first panel area 41 according to control by the panel driving unit 30. At an initial process of outputting image data, the gate driver IC 45 may be controlled so that the gate signal is provided to gate lines starting at a gate line of the first start point of the first panel area 41. Accordingly, an open time of the second start point of the second panel area 42 may be an implementation time of the first image frame 410 on the first panel area 41. Here, since the panel driving unit 30 accesses the frame memory 20b according to the dual function, the gate driver IC 45 may suspend the output of the gate signal. Accordingly, the first image frame 410 may not be output to the second panel area 42. Thereafter, the gate driver IC 45 may output exactly or approximately synchronous gate signals at the start points of the first and second panel areas 41 and 42.

According to an embodiment of the present disclosure, when the second image data 220 is provided to the first and second panel areas 41 and 42 and the gate signals are simultaneously provided to each panel area as illustrated in the state 702, the display panel 40 may output the second image frame 420 through each panel area. As illustrated in the state 703, since the third image data 230 is provided to the first and second panel areas 41 and 42, the third image frame 430 may be output through each panel area. As illustrated in the state 704, when the gate signals are synchronously provided to the first and second panel areas 41 and 42 and the fourth image data 240 is provided to the first and second panel areas 41 and 42, the display panel 40 may output the fourth image frame 440 through each panel area.

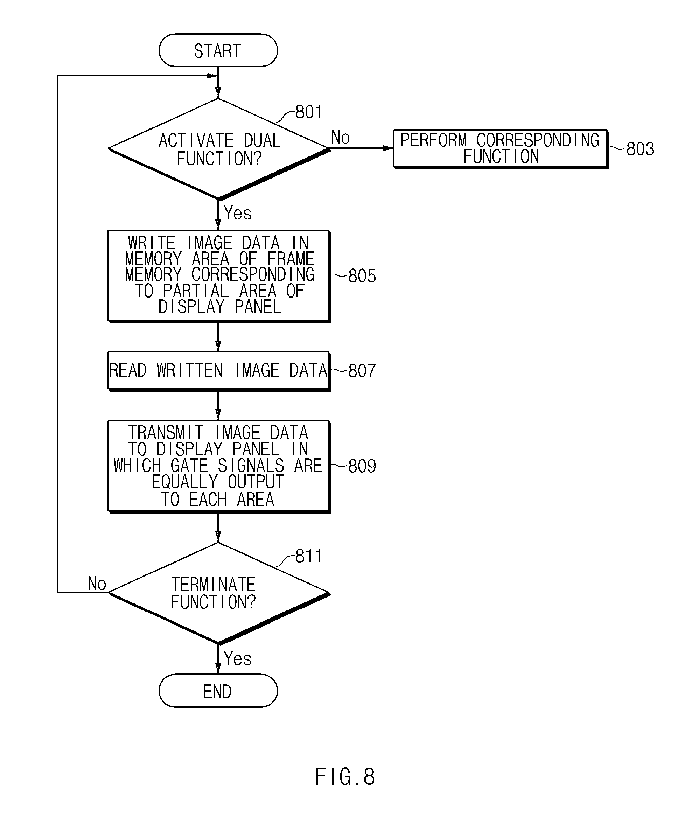

FIG. 8 is a flowchart illustrating a method for controlling output of image data according to another embodiment of the present disclosure.

Referring to FIG. 8, according to an embodiment of the present disclosure, the control module 160 may determine whether an event related to activation of the dual mode or dual function occurs in operation 801. If an event that occurs in operation 801 is not related to activation of the dual function, the control module 160 may proceed to operation 803 to support performance of a corresponding function.

If an event related to activation of the dual function occurs in operation 801, the control module 160 may write image data in a memory area of the frame memory 20 corresponding to a partial area of the display panel 40 in operation 805. In relation to this operation, the control module 160 may define a partial area of the frame memory 20 so that the partial area has a size of image data to be output to a partial area of the display panel 40. According to an embodiment of the present disclosure, the control module 160 may define a memory area of the frame memory 20 so that the memory area corresponds to a size of an image frame to be output to one of two panel areas. The control module 160 may adjust at least one of a size and resolution of an image frame so that the image frame is fit to a partial memory area of the frame memory.

In operation 807, the control module 160 may control reading of image data from a partial memory area of the frame memory 20. The control module 160 may control the panel driving unit 30 so as to read image data corresponding to one image frame from a partial memory area of the frame memory 20, for example, a memory area defined in relation to image data writing.

When the reading of the image data is completed, the panel driving unit 30 may transmit the image data read from a partial memory area of the frame memory 20 to the display panel 40 in which gate signals are equally output to each area, in operation 809. The display panel 40 may output the transmitted image data. In relation to this operation, the panel driving unit 30 may control the gate driver IC 45 so that a gate signal is simultaneously output to start points of the first and second panel areas 41 and 42. While the panel driving unit 30 transmits the read image data to the display panel 40, the control module 160 may write image data corresponding to a new image frame in a memory area, image data reading from which has been completed.

Next, the control module 160 may determine whether an event related to function termination occurs in operation 811. If the event related to function termination occurs, the control module 160 may terminate the dual function. According to an embodiment of the present disclosure, the control module 160 may terminate the dual function and may enter the general mode. Here, in the general mode, the display panel 40 may not be divided into partial areas so that one image frame is output to the entire area of the display panel 40. Upon receiving an event of releasing a dual function for outputting image data to the plurality of panel areas, the control module 160 may write image data corresponding to one image frame in the entire area of the frame memory 20. In relation to the function termination event, the control module 160 may enter the sleep mode or may return to a function performed immediately before performing the dual function. If the function termination event does not occur, the process may return to operation 801 so that the control module 160 re performs operation 801 and the following operations. According to various embodiments of the present disclosure, the control module 160 of the electronic device 100 may alternately write the successive image frames of the image frame and the black frame in the partial memory area defined to have a size of image data to be output to a partial panel area. In this manner, the control module 160 may improve the visibility of an image frame.

The electronic device may further include elements not mentioned above, such as an acceleration sensor, a gyro sensor, a GPS module, a near field communication (NFC) module, a vibration motor, an accessory and the like, with the trend of digital convergence that involves various modifications. Some of the above mentioned elements may be excluded or replaced by other elements.

According to various embodiments of the present disclosure, a motion blur phenomenon or a flicker phenomenon does not occur in the dual function or dual mode in which successive image frames are dividedly output to one display panel, thereby ensuring the quality of an image.

Furthermore, various embodiments of the present disclosure enable the implementation of the dual mode or dual function without requiring additional hardware, so that the manufacturing cost is reduced and the visibility is improved, enhancing the product competitiveness.

It will be appreciated that embodiments can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a compact disk (CD), DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the scope of the present disclosure as defined by the appended claims.

## Claims

1. A display module (100) for a display panel having a plurality of panel areas, the display module comprising:
a frame memory (20; 20a; 20b) having at least one memory area in which image data corresponding to successive image frames are written; and
a panel driving unit (30) configured to collect image data corresponding to one image frame from the frame memory and to output the collected image data to at least one of the plurality of panel areas of the display panel.

2. The display module of claim 1, wherein the frame memory (20a) has a plurality of memory areas (21, 22) and wherein the image data corresponding to the image frames are alternately written in respective ones of the plurality of memory areas.

3. The display module of claim 1, wherein the frame memory (20b) includes a partial memory area, the partial memory area being defined to correspond to a size of an image frame to be output to a partial area of the display panel, and
wherein the image data corresponding to the image frames are sequentially written in the partial memory area.

4. The display module of any one of claims 1, 2 or 3, further comprising a display panel (40), wherein the display panel (40) comprises:
a gate driver integrated circuit, IC, (45) configured to output a gate signal;
a data driver IC (47) configured to output a data signal; and
a plurality of panel areas (41, 42) through which respective image frames are output.

5. The display module of claim 4, wherein the plurality of panel areas comprises:
a first panel area (41) corresponding to signal lines between a first start point and a second start point; and
a second panel area (42) corresponding to signal lines between the second start point and a last point.

6. The display module of claim 5, wherein the gate driver IC (45) provides substantially simultaneously synchronous gate signals to the first panel area (41) and the second panel area (42), and
wherein image data corresponding to the image frame are respectively provided to the first panel area (41) and the second panel area (42).

7. An electronic device comprising:
a display module (100) as claimed in any one of claims 1 to 7; and
a control module (160) configured to output one image frame to the display module (100) in performance of a general function and further configured to substantially simultaneously output one image frame provided from the image content to one or more of the plurality of panel areas in performance of a dual function.

8. The electronic device of claim 7, wherein the control module (160) is configured to:
sequentially write the successive image frames of the image content in a first memory area among the plurality of memory areas, and write a black frame in a second memory area, or
alternately write the successive image frames of the image content and the black frame in the partial memory area.

9. A method for controlling output of image data in a dual function for outputting image data to a plurality of panel areas of a display panel, the method comprising:
dividing one display panel into a plurality of panel areas;
defining at least one memory area corresponding to a size of image data to be output to one of the plurality of panel areas;
writing image data corresponding to successive image frames of image content in the at least one memory area;
reading the written image data from the at least one memory area; and
outputting the read image data to the plurality of panel areas.

10. The method of claim 9, wherein the writing of the image data comprises one of:
writing image data corresponding to subsequent successive image frames in a second memory area among the at least one memory area, while reading image data written in a first memory area among the at least one memory area; and
sequentially writing image data in a partial memory area defined to correspond to a size of the image data to be output to a given one of the plurality of panel areas.

11. The method of claim 9 or claim 10, wherein the outputting of the read image data comprises providing substantially simultaneously synchronous gate signals to a first panel area corresponding to signal lines between a first start point and a second start point and to a second panel area corresponding to signal lines between the second start point and a last point.

12. The method of claim 11, wherein the outputting of the read image data comprises providing image data corresponding to one image frame to the first panel area and the second panel area.

13. The method of any one of claims 9 to 12, wherein the outputting of the read image data comprises substantially simultaneously outputting a specific image frame to a left eye panel area and a right eye panel area among the plurality of panel areas.

14. The method of any one of claims 9 to 13, further comprising:
receiving an event of releasing the dual function for outputting image data to the plurality of panel areas; and
writing image data corresponding to one image frame to be output to the entirety of the display panel, thereby entering a general display mode.

15. The method of any one of claims 9 to 14, further comprising one of:
sequentially writing the successive image frames of the image content in a first memory area among the plurality of memory areas and writing a black frame in a second memory area among the plurality of memory areas; and
sequentially writing image data in one memory area defined to correspond to a size of the image data to be output to the one panel area.
